# EUROPEAN PATENT APPLICATION

(11) **EP 2 405 714 A1**
(43) Date of publication of application: **11.01.2012**
(21) Application number: 10748730.8
(22) Date of filing: 02.03.2010
(51) Int. Cl.: H05B 6/12

(54) **INDUCTION COOKING DEVICE**

(30) Priority: 06.03.2009 JP 2009053560
(71) Applicant: Mitsubishi Electric Corporation, Tokyo 100-8310 (JP); Mitsubishi Electric Home Appliance Co., Ltd., Fukaya-shi, Saitama 369-1295 (JP)
(72) Inventor: MATSUDA, Tetsuya, Tokyo 100-8310 (JP); TAKESHITA, Miyuki, Tokyo 100-8310 (JP); SHIMOHATA, Kenji, Tokyo 100-8310 (JP); KAMEOKA, Kazuhiro, Saitama 369-1295 (JP)
(74) Representative: Sajda, Wolf E.
(86) International application number: PCT/JP2010/053311
(87) International publication number: WO 2010/101135

(57) **Abstract**

An induction-heat cooking system according to one Embodiment of the present invention includes a central heating coil wound in a planar configuration, a plurality of peripheral heating coils arranged adjacent the central heating coil, and a high-frequency current supply for supplying high-frequency current to each one of the central heating coil and the peripheral heating coils individually, so that the current flows though the peripheral heating coils along adjacent regions between the central heating coil and the peripheral heating coils, in a direction substantially the same as the current through the central heating coil.

## Description

### Technical Field

The present invention relates to an induction-heat cooking system having a plurality of induction heating coils.

### Background Art

An induction-heat cooking system such as an IH cooker supplies an alternating current having frequency of several tens of kHz to a heating coil so as to generate an alternating magnetic field effecting an eddy current within a cooking pan or pot made of conductive material, thereby to heat the cooking pan.

Patent Document 1 (Japanese Patent Registration No. 3 725 249) describes an induction-heat cooking system having a plurality of induction heating coils. The induction-heat cooking system illustrated in Fig. 3 of Patent Document 1 includes a first heating coil and two of second heating coils sandwiching and encompassing both sides of the first heating coil. The first heating coil is supplied with high-frequency current of which frequency is different from one of the high-frequency current supplied to the second heating coils.

Since the frequencies of the high-frequency currents supplied to the first and second heating coils are different, simultaneous power supply both to the heating coils makes beating sound (noise) having a frequency equal to the difference between ones supplied to the first and second heating coils.
To address this problem, the invention of Patent Document 1 suggests a serial connection of the first and second heating coils so that both of the second heating coils have the induction currents induced by the first heating coil, which are designed to flow in opposite directions to be cancelled by each other, thereby to suppress mutual interference making the beating sound.

### Summary of Invention

### Problems to be solved by the Invention

However, although the technology of Patent Document 1 may suppress the mutual interference upon simultaneous power supply to the multiple heating coils close to each other, the first heating coil has an current flow in a direction which is always the same as the current flow though one of the second heating coils and also which is always opposite to the current flow though the other one of the second heating coils.
With the same direction of the current flows through the first and second heating coils, the magnetic field (and eddy current) in the heating pan between the first and second heating coils are reinforced by each other. On the other hand, with the opposite direction of the current flows through the first and second heating coils, the magnetic field in the heating pan between those heating coils are cancelled by each other.
Thus, the magnetic field (and eddy current) received in the heating pan such as a pan bottom may be varied based upon whether the same or opposite directions of the current flows are supplied to the first and second heating coils, that is, based upon positions of the heating coils in relative to the heating pan. Also, the heating pan positioned between the first and second heating coils having opposite current flows cannot be efficiently heated because of mutual cancellation of the magnetic field.

### Means for Solving Problems

In order to overcome the above-described drawbacks, one Embodiment of the present invention is to provide an induction-heat cooking system, which includes a central heating coil wound in a planar configuration, a plurality of peripheral heating coils arranged adjacent the central heating coil, and a high-frequency current supply for supplying high-frequency current to each one of the central heating coil and the peripheral heating coils individually, so that the current flows though the peripheral heating coils along adjacent regions between the central heating coil and the peripheral heating coils, in a direction substantially the same as the current through the central heating coil.

### Advantage of Invention

According to one Embodiment of the present invention, the cooking pan can be heated in a uniform manner and the heating efficiency for an overall of the cooking pan is enhanced.

### Brief Description of Drawings

Fig. 1 is a perspective view schematically illustrating an overall of the induction-heat cooking system according to the present invention.

Fig. 2 is a top plan view of the induction heater of Embodiment 1.

Fig. 3 is a circuit block diagram of the high-frequency current supply of Embodiment 1.

Fig. 4 is a top plan view of the induction heater of Embodiment 2.

Fig. 5 is a cross sectional view of the induction heater of Embodiment 2.

Fig. 6 is an enlarged view of the central heating coil of Embodiment 2.

Fig. 7 is an enlarged view of the peripheral heating coil of Embodiment 2.

Fig. 8 is a top plan view similar to Fig. 4, illustrating the cooking pan placed at an offset position.

Fig. 9 is a top plan view of the induction heater of Embodiment 3.

Fig. 10 is a top plan view of the induction heater of an alternative of Embodiment 3.

Fig. 11 is a top plan view of the induction heater of Embodiment 4.

Fig. 12 is a top plan view of the induction heater of an alternative of Embodiment 4.

Fig. 13 is a top plan view of the induction heater of another alternative of Embodiment 4.

Fig. 14 is a cross sectional view of the induction heater of Embodiment 5.

Fig. 15 is a cross sectional view of the induction heater taken along a line XV-XV of Fig. 14.

Fig. 16 is a top plan view of the magnetic member of Embodiment 6.

Fig. 17 is a cross sectional view of the magnetic member and the induction heater, taken along a line XVII-XVII of Fig. 16.

Fig. 18 is a top plan view of the magnetic member of an alternative of Embodiment 6.

Fig. 19 is a cross sectional view of the magnetic member and the induction heater, taken along a line XIX-XIX of Fig. 18.

Fig. 20 is a top plan view of the magnetic member of an alternative of Embodiment 6.

Fig. 21 is a cross sectional view of the magnetic member and the induction heater, taken along a line XXI-XXI of Fig. 20.

Fig. 22 is a top plan view of the magnetic member of another alternative of Embodiment 6.

Fig. 23 is a cross sectional view of the magnetic member and the induction heater, taken along a line XXIII-XXIII of Fig. 22.

### Description of Reference Numeral

- 1 to 6: = induction-heat cooking system,
- 7: = housing,
- 8: = top plate,
- 9: = power regulator,
- 10: = induction heater
- 11: = central coil,
- 14: = peripheral coil,
- 20: = induction heater
- 21: = central coil,
- 22: = inner coil portion,
- 23: = outer coil portion,
- 24: = peripheral coil,
- 30: = induction heater
- 31: = central coil
- 34: = peripheral coil,
- 40: = induction heater
- 41: = central coil
- 44: = peripheral coil,
- 50: = induction heater
- 51: = central coil
- 52: = inner coil portion
- 53: = outer coil portion
- 54: = peripheral coil,
- 70: = magnetic field,
- 72: = central core portion,
- 73: = peripheral core portion,
- 100: = high-frequency current supply,
- 102: = tri-phase alternating current source,
- 104: = converter,
- 106: = smoothing condenser,
- 108: = inverter,
- 112: = resonance capacitor

### Description of Embodiments

Referring to attached drawings, embodiments of an induction-heat cooking system according to the present invention will be described hereinafter. In the description, a couple of terms for indicating the directions (for example, "upper", "lower", "upward" or "downward", etc.) are conveniently used just for facilitating clear understandings, it should not be interpreted that those terms limit the scope of the present invention. Like components are denoted with like reference numerals throughout the description.

### Embodiment 1.

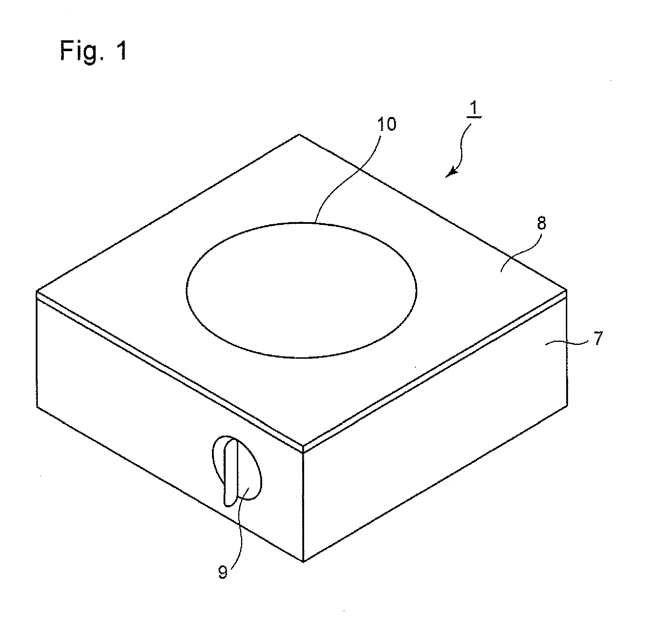

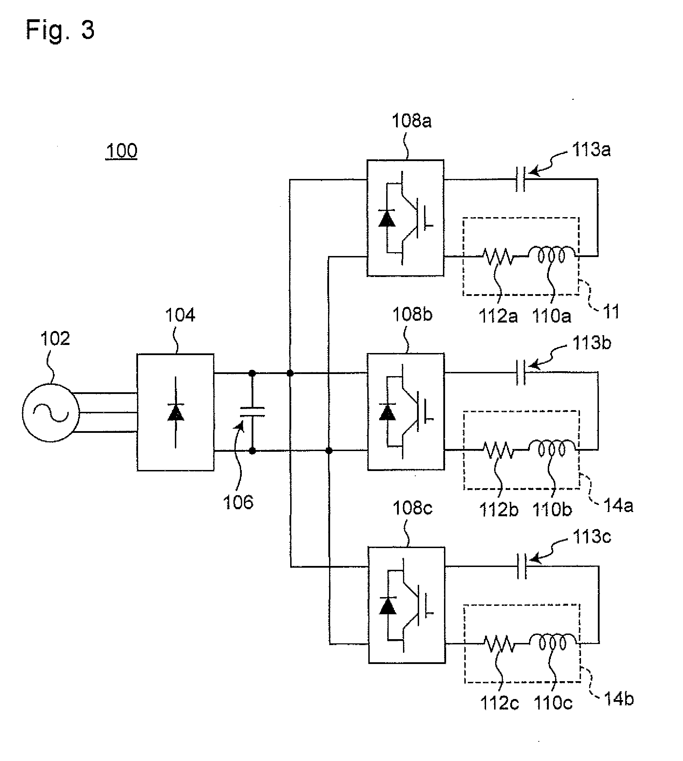

With reference to Figs. 1 to 3, the first Embodiment of the induction-heat cooking system will be described hereinafter. Fig. 1 is a perspective view schematically illustrating an overall of the induction-heat cooking system 1 of the present embodiment. The induction-heat cooking system 1 includes, in general, a housing 7, a top plate 8 arranged thereon, a power regulator 9 for allowing a user to regulate the heating power, and an induction heater 10. Although not shown here, the induction-heat cooking system 1 also includes a high-frequency current supply 100 (Fig. 3) built within the housing 7, for supplying a high-frequency current to the induction heater 10.

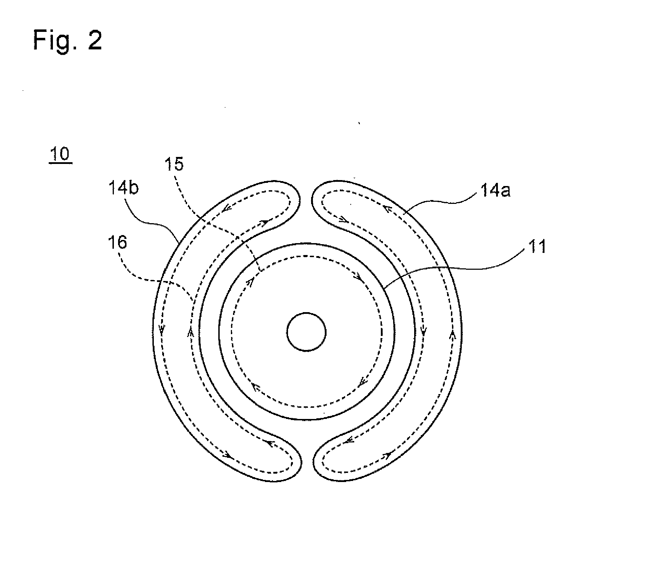

Fig. 2 is a top plan view of the induction heater 10 with the top plate 8 of Fig. 1 removed. The induction heater 10 of Fig. 2 includes a heating coil 11 arranged in the middle of the housing 7, which is referred to as a "central heating coil", and a pair of heating coils 14a, 14b peripherally arranged around and adjacent to the central heating coil 11, which are referred to as "peripheral heating coils". The central heating coil 11 may be shaped with a planar configuration of a circle, and formed by circumferentially winding a conductive line of any metal coated with insulation,
Also, each of the peripheral heating coils 14a, 14b may be shaped with a planar configuration of a semi-circle (like a banana or a cucumber), and formed by winding a similar conductive line along the semi-circle. Thus, the peripheral heating coils 14a, 14b are adapted to extend substantially along the central heating coil 11 in semi-circle regions therebetween.

Fig. 3 is a circuit diagram of the high-frequency current supply 100 built in the induction-heat cooking system 1. The high-frequency current supply 100 of the present Embodiment includes, in general, a converter 104 such as a diode bridge for converting a tri-phase alternating current 102 into a direct current, a smoothing condenser 106 connected across the outputs of the converter 104, and three of inverters 108a, 108b, 108c connected in parallel with the smoothing condenser 106.
The inverters 108a, 108b, 108c are designed to transform the direct current from the converter 104 into the high-frequency current, for supplying the high-frequency current individually to the central heating coil 11 and each of the peripheral heating coils 14a, 14b. The central heating coil 11 and the peripheral heating coils 14a, 14b are represented in Fig. 3, as equivalent circuits including inductances 110a, 110b, 110c, and resistances 112a, 112b, 112c, respectively.
The inverters 108a, 108b, 108c are connected to the central heating coil 11 and the peripheral heating coils 14a, 14b through resonance capacitors 113a, 113b, 113c resonating with the inductances 110a, 110b, 110c thereof, respectively, and also receives control signals from a control circuit (not shown) to supply the high-frequency current modulated by the control signals to the central heating coil 11 and the peripheral heating coils 14a, 14b.

As described herein, two of semicircular regions are defined on the top plate 8 between the central heating coil 11 and the peripheral heating coils 14a, 14b, which are referred to simply as "adjacent regions".
The inverters 108a, 108b, 108c are controlled to supply the high-frequency current to the central heating coil 11 and the peripheral heating coils 14a, 14b so that at the moment when the current flows though the central heating coil 11 in a predetermined direction (for example, in a clockwise direction as indicated by a dotted line 15 in Fig. 2), the current flows though the peripheral heating coils 14a, 14b, always in the same direction along the adjacent regions (for example, in a counter-clockwise direction as indicated by another dotted line 16 in Fig. 2).
Thus, according to one Embodiment of the present invention, the high-frequency current supply 100 controls the currents supplied to the central heating coil 11 and the peripheral heating coils 14a, 14b so that the currents flow along the adjacent regions in substantially the same direction as denoted by the dotted lines 15, 16 in Fig. 2.

Since the calorific power P generated by an eddy current I in the pan bottom along the adjacent regions is proportional to square of an eddy current I, which may be expressed as P = R x I² (R = resistance of the pan bottom), the unidirectional current flows through the central heating coil 11 and the peripheral heating coils 14a, 14b intensify the eddy current I along the adjacent regions, which improves the heating efficiency in a relatively extended adjacent regions as shown in Fig. 2.
Thus, this prevents the mutual interference of the alternating magnetic fields along the adjacent regions generated by the central heating coil 11 and the peripheral heating coils 14a, 14b, thereby enhancing the heating efficiency.
Also, the central heating coil 11 and the peripheral heating coils 14a, 14b arranged on both sides thereof are designed to generate the alternating magnetic fields symmetrically to minimize variation of heat induced in the pan bottom regardless the position of the pan, thereby heating the pan in an uniform manner.

Referring to Fig. 3, a circuit loss of the inverters 108a, 108b, 108c will be discussed herein in detail. In general, the circuit loss of an inverter includes a conduction loss proportional to the current and a switching loss caused upon switching of IGBT (Insulated Gate Bipolar Transistor) of the inverter. However, when the oscillation frequency is of about 20 kHz, the conduction loss is much greater than the switching loss that is deemed as being negligible.
These voltages across each of the inverters 108a, 108b, 108c, of Fig. 3 are equal to one another, and the circuit loss thereof is proportional to the current. Therefore, if the current running through each one of the inverters 108a, 108b, 108c, or the conduction loss thereof can be reduced, the circuit loss thereof can preferably be reduced as well.

Meanwhile, in order to heat the pan in a thermally uniform manner or generate a homogenized heat per unit area of the pan, the eddy current of the pan caused by the central heating coil 11 is to be equal to one caused by the peripheral heating coils 14a, 14b, Thus, to achieve the uniform heating, each of the central heating coil 11 and the peripheral heating coils 14a, 14b should be designed to have the Coil Ampere-Turn, i.e., A x T (A: coil current, T: coil turns), which is equal to one another.
Typically, the central heating coil 11 has the cross sectional area taken along a plane parallel to the top plate 8, which is greater than each one of the peripheral heating coils 14a, 14b, and therefore the central heating coil 11 has the inductance proportional to the cross sectional area, which is proportional to the coil turns thereof.

Thus, as indicated above, as the voltages across each of the inverters 108a, 108b, 108c, of Fig. 3 are equal to one another, the peripheral heating coils 14a, 14b are designed to have the coil turns greater than the central heating coil 11 for the uniform heating, which reduces the current through of the peripheral heating coils 14a, 14b, thereby substantially reducing the circuit loss of the inverters 108b, 108c.

Also, according to one Embodiment of the present invention, since the cooking pan is heated not only by the central heating coil 11 but also by the peripheral heating coils 14a, 14b, the current applied to the central heating coil 11 is less than that in case where the cooking pan is heated only by the central heating coil 11. Therefore, the circuit loss of each of the inverters 108a, 108b, 108c can be reduced.

### Embodiment 2.

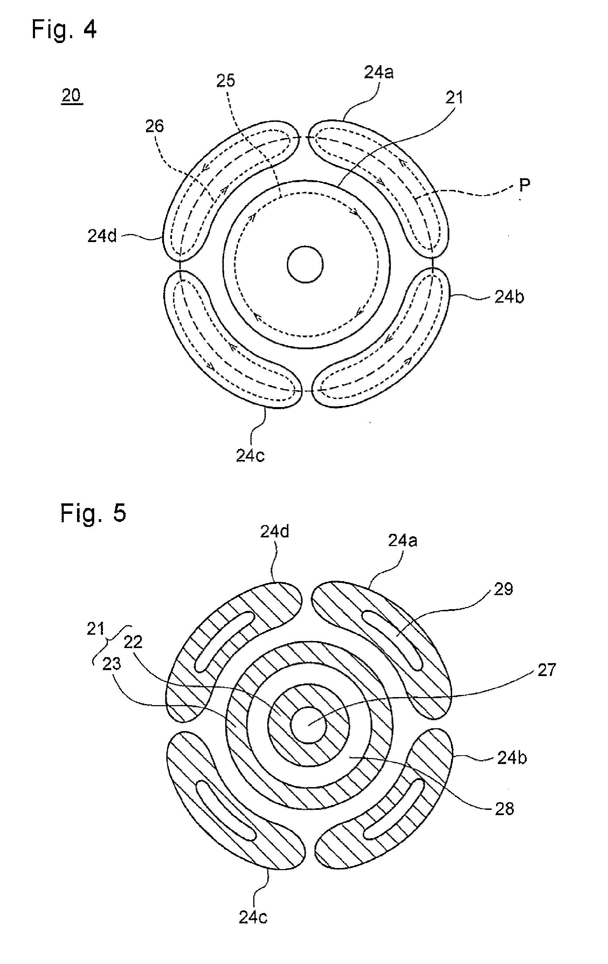

Referring to Figs. 4 to 8, the second Embodiment of the induction-heat cooking system according to the present invention will be described hereinafter. The induction-heat cooking system 2 of the second Embodiment is similar to one of the first Embodiment except that four of peripheral heating coils 24a, 24b, 24c, 24d are arranged adjacent and around a central heating coil 21. Therefore, a duplicated description in detail for the common features will be eliminated.

Fig. 4 is a plan view of an induction heater 20 similar to Fig. 2, of the second Embodiment of the present invention. As mentioned above, the induction heater 20 includes the central heating coil 21 and four of the peripheral heating coils 24a to 24d arranged adjacent and around the central heating coil 21.

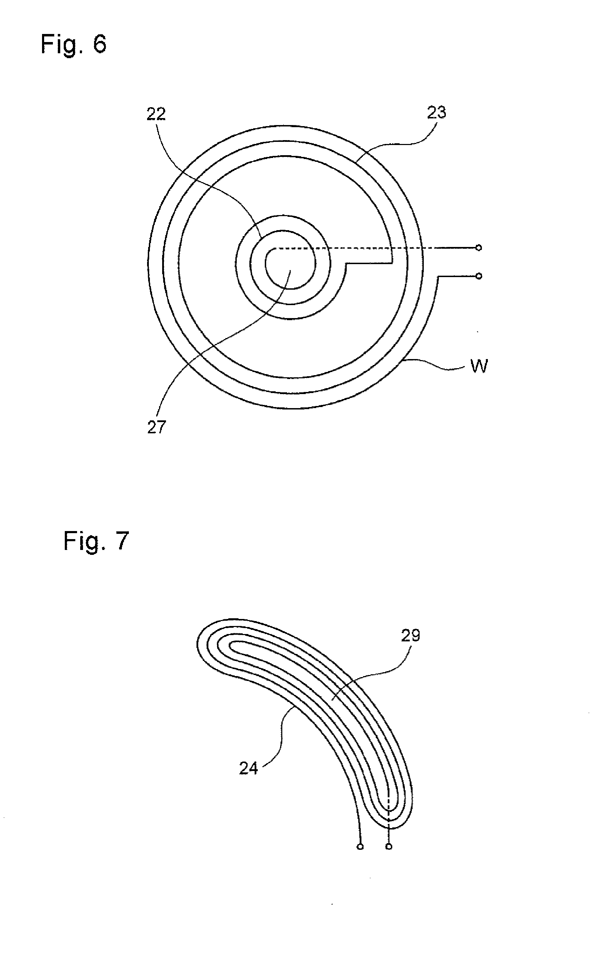

Fig. 5 is a cross sectional view of the induction heater 20 taken along a plane parallel to the top plate 8, and Figs. 6 and 7 are enlarged plan views of the central heating coil 21 and one of the peripheral heating coils 24a to 24d, respectively. The central heating coil 21 may be formed by circumferentially winding a conductive line of any metal coated with insulation. Also, the central heating coil 21 may include an inner coil portion 22 and an outer coil portion 23 connected in series as illustrated in Fig. 6.
Further, although not shown here, in the central heating coil 21, a magnetic member (ferrite member) may be provided extending upwardly (towards a front side in Fig.6) through a central opening 27 of the inner coil portion 22 and another member (ferrite member) may be provided extending upwardly through a gap between the inner and outer coil portions 22, 23, so that the magnetic circuit generated by the central heating coil 21 and the peripheral heating coil 24 has a reduced magnetic resistance to increase the magnetic field, thereby enhancing the heating efficiency of the pan.
Also, the peripheral heating coil 24 may be shaped in a planar configuration of a quarter-circle arc as shown in Fig. 7 and formed by winding the conductive line along the quarter-circle arc. Further, in the peripheral heating coil 24, a magnetic member may be provided extending upwardly through a central opening 29 of the peripheral heating coil 24, similar to the inner coil portion 22.

The high-frequency current supply 100 of the second Embodiment has a circuit architecture similar to Fig. 3, including five of inverters 108 (not shown) for supplying the high-frequency current to the central heating coil 21 and each of the peripheral heating coils 24a to 24d under individual driving conditions.
The high-frequency current supply 100 is operated so that the current runs always in substantially the same direction along the circular adjacent regions between the central heating coil 21 and each of the peripheral heating coils 24a to 24d as denoted by dotted lines 25, 26 in Fig. 4.
Therefore, similar to the first embodiment, the induction-heat cooking system 2 of the second Embodiment prevents the mutual interference of the alternating magnetic fields along the adjacent regions generated by the central heating coil 21 and the peripheral heating coils 24a to 24d so that the eddy current induced by the alternating magnetic fields in the cooking pan is increased for improving the heating efficiency, and the alternating magnetic fields is symmetrically distributed for achieving the uniform heating of the cooking pan.

It should be noted that in general, based upon whether the cooking pan is placed over the induction-heating coil or how much size (area) of the induction-heating coil is covered by the cooking pan, the impedance of the induction-heating coil is varied, and therefore, the current running through the inverter is also varied accompanying with the impedance of the induction-heating coil.
The current through the inverter can be detected, and when it is determined based upon the detected current, especially that the cooking pan is not at all placed over each of the peripheral heating coils 24a to 24d (or the area of the cooking pan covering each of the peripheral heating coils is less than a predetermined value), it is preferable to design the high-frequency current supply 100 to stop supplying the current to such peripheral heating coils 24a to 24d which gives no or little contribution on heating of the pan, for improving the current-heat conversion efficiency.

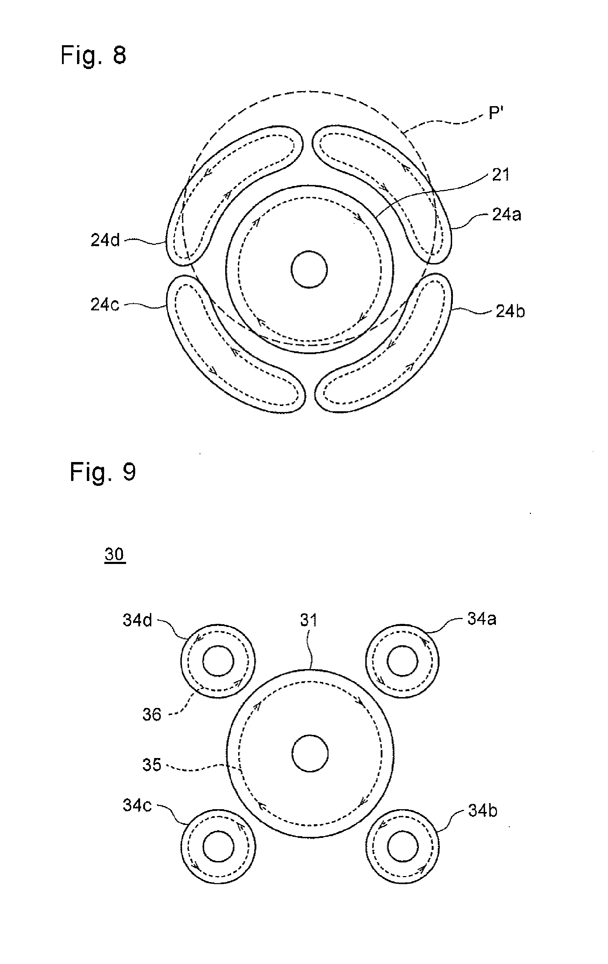

In particular, when the pan bottom is properly placed over the induction heater 20 as shown by the long dotted line P in Fig. 4, the central heating coil 21 and the peripheral heating coils 24a to 24d may be all supplied with the high-frequency currents at a time.
On the other hand, when the pan bottom is placed offset (at a position upwardly deviated from the proper position of P in Fig. 4) over the induction heater 20 as shown by the long dotted line P' in Fig. 8, the peripheral heating coils 24b, 24c can give no or little contribution on heating of the pan, even if the power is supplied thereto.
Therefore, in order to avoid consumption of undesired power, the high-frequency current supply 100 of the present Embodiment is adapted to stop supplying the current to the peripheral heating coils 24b, 24c and heats the cooking pan by means of the central heating coil 21 and the peripheral heating coils 24a, 24d.
Thus, this achieves the induction-heat cooking system 2 having the high-frequency current supply 100 with the high current-heat conversion efficiency even when a user places the pan at a position deviated from the proper position.

Also, the above description is made for the case when the pan is placed at an upward position deviated from the proper position, this approach may be equally applied when the pan is placed offset along any directions, e.g., downward, rightward, or leftward from the proper position, the high-frequency current supply 100 may be configured to detect the current through each of the peripheral heating coils 24a to 24d, and halt the power supply to any one of the peripheral heating coils 24a to 24d over which the pan is not placed, for avoiding the undesired power consumption.
Also, in the foregoing, detection whether the pan covers each of the peripheral heating coils 24a to 24d is made based upon the current through the each of the inverters, however, it is feasible to detect whether the pan is placed, by means of any other sensors such as a mechanical sensor and an optical sensor.

### Embodiment 3.

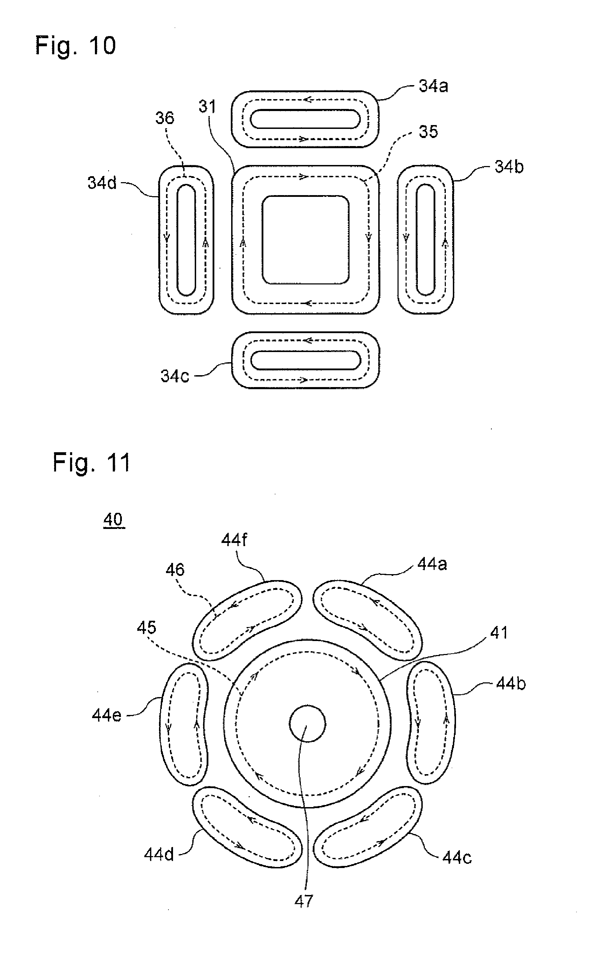

Referring to Figs. 9, 10, the third Embodiment of the induction-heat cooking system according to the present invention will be described hereinafter. The induction-heat cooking system 3 of the third Embodiment is similar to one of the second Embodiment except that each of the peripheral heating coils 34a to 34d is shaped with a planar configuration of a circle. Therefore, a duplicated description in detail for the common features will be eliminated.

The induction heater 30 includes the peripheral heating coils 34a to 34d shaped with a planar configuration of a circle as shown in Fig. 9. The inverters 108 of the present invention are controlled to supply the high-frequency current to the central heating coil 31 and each of the peripheral heating coils 34a to 34d so that at the moment when the current flows though the central heating coil 31 in the predetermined direction, e.g., in a clockwise direction as indicated by a dotted line 35 in Fig. 9, the current runs though the peripheral heating coils 34a to 34d, always in the same direction along the adjacent regions, e.g., in a counter-clockwise direction as indicated by another dotted line 36 in Fig. 9.
Thus, the mutual interference of the alternating magnetic fields generated by the central heating coil 31 and the peripheral heating coils 34a to 34d is avoided along the adjacent regions for enhancing the heating efficiency, and the symmetrical distribution of the alternating magnetic fields is defined for achieving the uniform heating of the cooking pan.

Since the induction heater 30 of the third Embodiment has the adjacent regions each of which is shorter than those of the second embodiment, it has the heating efficiency less improved than the second embodiment, however, the peripheral heating coils in a circular shape can be manufactured more easily than those in the quarter-circle arc shape at a more reasonable cost.

Alternatively, the central heating coil 31 and each of the peripheral heating coils 34a to 34d may have a planar shape of nearly a rectangle as shown in Fig. 10. Also in this alternative, when the central heating coil 31 is supplied with the current running in the predetermined direction as indicated by a dotted line 35 in Fig. 10, the peripheral heating coils 34a to 34d are supplied with the current running in the same direction as denoted by another dotted line 36 therein,
Therefore, this avoids the mutual interference of the alternating magnetic fields generated by and along the adjacent regions between the central heating coil 31 and the peripheral heating coils 34a to 34d for enhancing the heating efficiency, and ensures the symmetrical distribution of the alternating magnetic fields for achieving the uniform heating of the cooking pan.

### Embodiment 4.

Referring to Figs. 11 to 13, the fourth Embodiment of the induction-heat cooking system according to the present invention will be described hereinafter. The induction-heat cooking system 4 of the fourth Embodiment is similar to one of the second Embodiment except that it includes six of the peripheral heating coils 44a to 44f. Therefore, a duplicated description in detail for the common features will be eliminated.

The induction heater 40 of Fig. 11 includes the peripheral heating coils 44a to 44f shaped with a planar configuration of a sixth part of a circle (like an extended oval) as shown in Fig. 11, each of which may be formed by winding the conductive line along the sixth part of a circle arc. Also, each of the peripheral heating coils 44a to 44f may include a magnetic member extending upwardly through a central opening 47 thereof as discussed in the second embodiment.
The inverters 108 supplying the high-frequency current to each of the peripheral heating coils 44a to 44f are controlled so that at the moment when the current flows though the central heating coil 41 in the predetermined direction as indicated by a dotted line 45 in Fig. 11, the current flows though the peripheral heating coils 44a to 44f, always in the same direction along the adjacent regions as indicated by another dotted line 46 in Fig. 11.
To this result, the mutual interference of the alternating magnetic fields generated by the central heating coil 41 and the peripheral heating coils 44a to 44f is avoided along the adjacent regions for enhancing the heating efficiency, and the symmetrical distribution of the alternating magnetic fields is defined for achieving the uniform heating of the cooking pan.

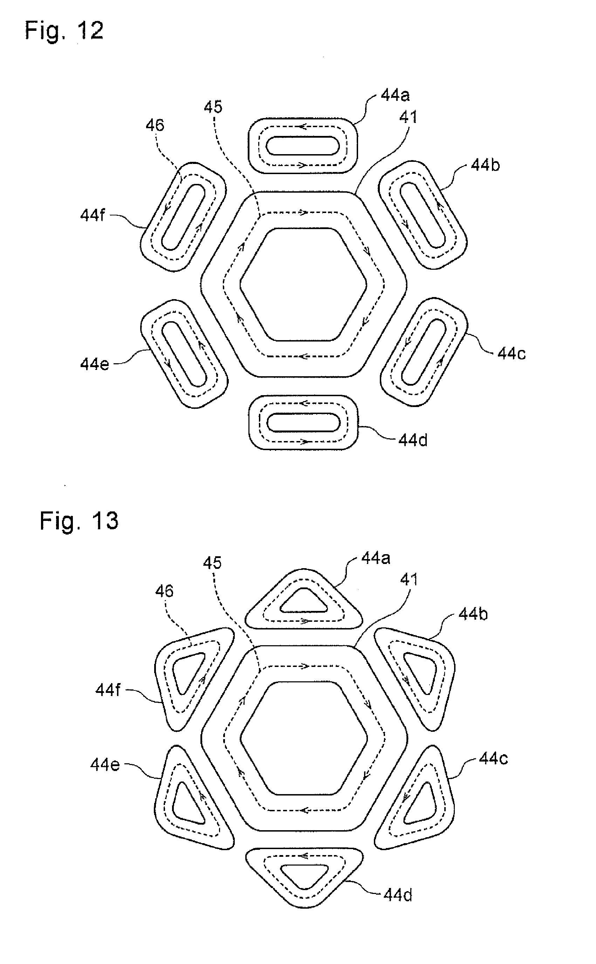

As alternatives of the induction heater 40, the central heating coil 41 and each of the peripheral heating coils 44a to 44f may have a planar shape of nearly a hexagon and nearly a rectangle as shown in Fig. 12, respectively. Also, each of the peripheral heating coils 44a to 44f may have a planar shape of nearly a triangle shown in Fig. 13.
In those alternatives, the currents running through the central heating coil 41 and each of the peripheral heating coils 44a to 44f are controlled to be directed in the same directions along the adjacent regions therebetween, as denoted by the dotted lines 45, 46 in Figs. 12, 13. Thus, similar to the above embodiments, this improves the heating efficiency and achieves the uniform heating of the cooking pan.

In the meantime, two of the adjacent peripheral heating coils 44a to 44f define a region therebetween, (referred to simply as the "end region"), the currents though the adjacent peripheral heating coils are directed in an opposite direction along the end regions, possibly causing a mutual interference of the alternating magnetic fields along the end regions generated by the adjacent peripheral heating coils.
However, the central heating coil 41 shaped in nearly a hexagon and the peripheral heating coils 44a to 44f shaped in nearly a rectangle can extend a physical gap between the adjacent peripheral heating coils 44a to 44f to reduce the mutual interference of the alternating magnetic fields along the end regions. Furthermore, the peripheral heating coils 44a to 44f shaped in nearly a triangle can suppress the mutual interference of the alternating magnetic fields along the end regions.

### Embodiment 5.

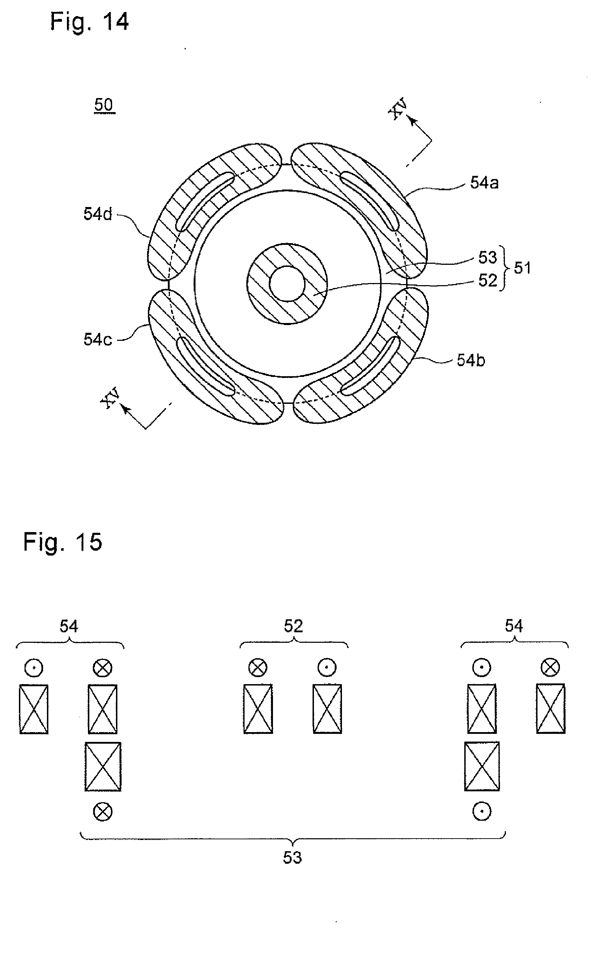

Referring to Figs. 14, 15, the fifth Embodiment of the induction-heat cooking system according to the present invention will be described herein. The induction-heat cooking system 5 of the fifth Embodiment is similar to one of the second Embodiment except that the central heating coil 51 includes inner and outer coil portions 52, 53, and that the outer coil portion 53 is provided beneath the peripheral heating coils 54a to 54d. Therefore, a duplicated description in detail for the common features will be eliminated.

Fig. 14 is a cross sectional view of the induction heater 50 similar to Fig. 5, and Fig. 15 is another cross sectional view of the induction heater 50 taken along a line XV-XV of Fig. 14. As briefly described above, the central heating coil 51 includes the outer coil portion 53 provided beneath the peripheral heating coils 54a to 54d.
It should be noted that the current flows through the outer coil portion 53 in the direction same as currents through the peripheral heating coils 54a to 54d along the adjacent regions therebetween (Fig. 15), like the Embodiment of Fig. 4.
To this result, a mutual interference of the alternating magnetic fields generated by the outer coil portion 53 and the peripheral heating coils 54a to 54d is avoided along the adjacent regions for enhancing the heating efficiency, and a symmetrical distribution of the alternating magnetic fields is defined for achieving the uniform heating of the cooking pan.

### Embodiment 6.

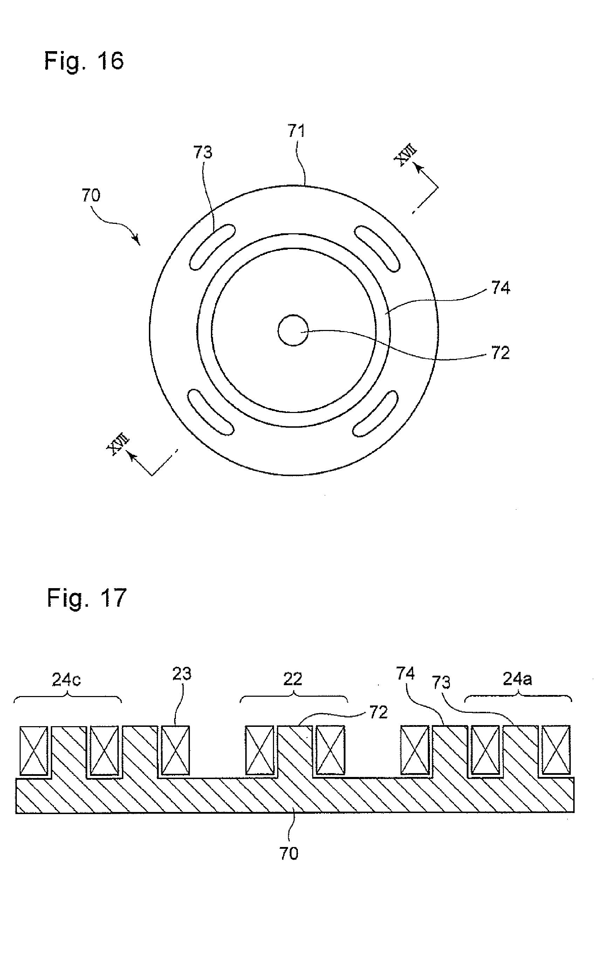

Referring to Figs. 16 to 19, the sixth Embodiment of the induction-heat cooking system according to the present invention will be described herein. The induction-heat cooking system 6 of the sixth Embodiment is similar to one of the second Embodiment except that a magnetic member (ferrite member) 70 is provided for magnetically coupling the central heating coil 21 with the peripheral heating coils 24a to 24d. Therefore, a duplicated description in detail for the common features will be eliminated.

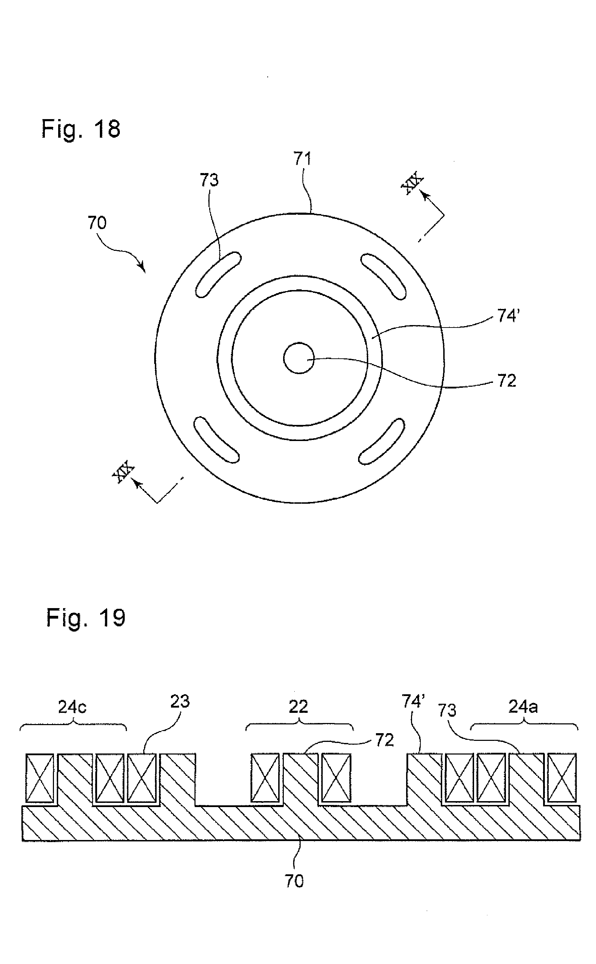

Fig. 16 is a top plan view of the magnetic member 70 provided beneath the central heating coil 21 and the peripheral heating coils 24a to 24d, and Fig. 17 is a cross sectional view of the magnetic member 70 and the heating coils 21, 24a to 24d, taken along a line XVII-XVII of Fig. 16.
The magnetic member 70 includes a disk body 71 of any metal, a central core portion 72 of magnetic material extending through the central opening 27 of the inner coil portion 22, peripheral core portions 73 of magnetic material each extending through the central opening 29 of each of the peripheral heating coils 24a to 24d, and an interstitial core portion 74 of magnetic material extending through an gap between the outer coil portion 23 and the peripheral heating coils 24a to 24d.
Thus, the disk body 71 performs as a connection among the central core portion 72, the peripheral core portions 73, and the interstitial core portion 74. Fig. 18 is a top plan view of the magnetic member 70 according to modification of the present embodiment, and Fig. 19 is a cross sectional view of the magnetic member 70 and the heating coils 21, 24a to 24d, taken along a line XIX-XIX of Fig. 18.
As illustrated, the magnetic member 70 includes the disk body 71, the central core portion 72, the peripheral core portions 73, and an interstitial core portion 74' of magnetic material extending through a gap between the inner coil portion 22 and the outer coil portion 23. Due to the magnetic coupling among the central heating coil 21 and the peripheral heating coils 24a to 24d, the magnetic circuit generated thereby has a reduced magnetic resistance to increase the magnetic field, for substantially enhancing the heating efficiency of the cooking pan.

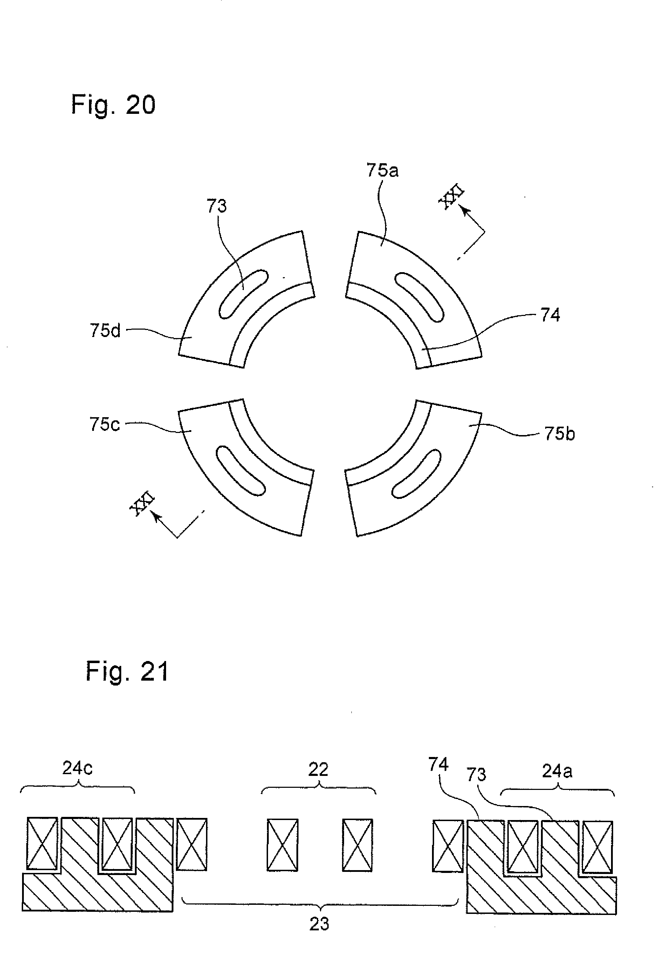

Furthermore, as shown in Figs. 20, 21, four of individual fan-like bodies 75a to 75d may be provided instead of the disk body 71, for magnetically coupling the central heating coil 21 and the peripheral heating coils 24a to 24d. Each of the fan-like bodies 75a to 75d is not provided beneath the central heating coil 21 and has no central core portion 72, but still performs as a connection between the peripheral core portion 73 and the interstitial core portion 74.

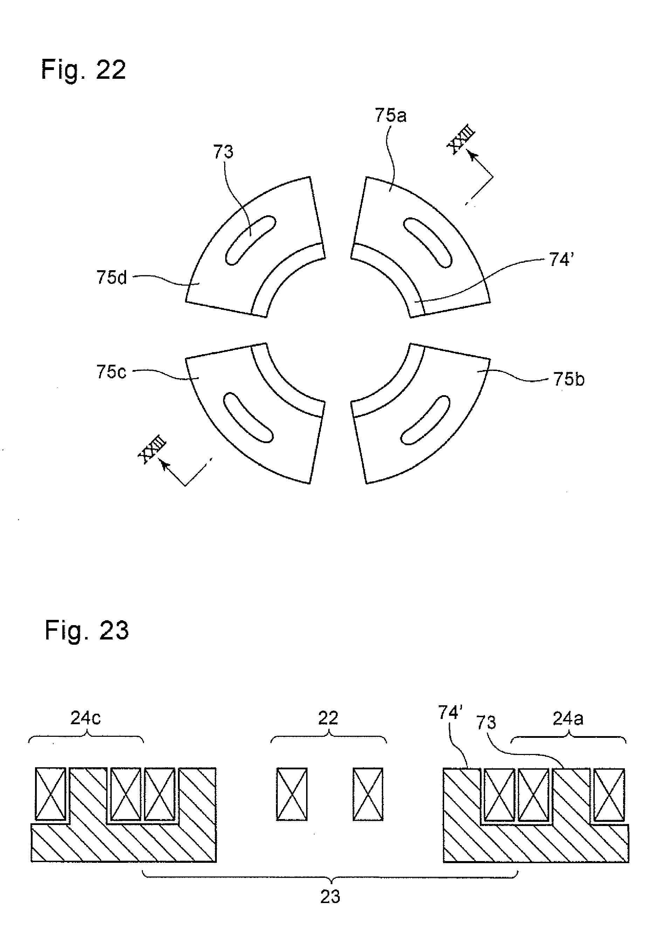

Fig. 22 is a top plan view of the magnetic member 70 according to another alternative, and Fig. 23 is a cross sectional view of the magnetic member 70 and the heating coils 21, 24a to 24d, taken along a line XXI-XXI of Fig. 20.
As illustrated, the interstitial core portion 74' may be provided inside of the outer coil portion 23 so that the peripheral heating coils 24a to 24d is magnetically coupled with the outer coil portion 23. Since those fan-like bodies 75a to 75d has a weight substantially less than the disc body 71, it is advantageously expected that the manufacturing process can be simplified and the manufacturing cost can be reduced.

## Claims

1. An induction-heat cooking system, comprising:
a central heating coil wound in a planar configuration;
a plurality of peripheral heating coils arranged adjacent the central heating coil; and
a high-frequency current supply for supplying a high-frequency current to each one of the central heating coil and the peripheral heating coils individually, so that the current flows though the peripheral heating coils along adjacent regions between the central heating coil and the peripheral heating coils, in a direction substantially the same as the current through the central heating coil.

2. The induction-heat cooking system according to claim 1,
wherein the central heating coil has a planar configuration contoured to follow each of the peripheral heating coils along the adjacent regions.

3. The induction-heat cooking system according to claim 1 or 2,
wherein four or more of the peripheral heating coils are arranged adjacent the central heating coil.

4. The induction-heat cooking system according to one of any preceding claims,
wherein the central heating coil has a circular or polygonal planar configuration.

5. An induction-heat cooking system, comprising:
a central heating coil wound in a planar configuration;
a plurality of peripheral heating coils arranged adjacent the central heating coil; and
a high-frequency current supply for supplying a high-frequency current to each one of the central heating coil and the peripheral heating coils individually, so that the voltages applied across each one of the central heating coil and the peripheral heating coils are equal, wherein each one of the peripheral heating coils has coil turns greater than the central heating coil.

6. The induction-heat cooking system according to one of any preceding claims,
wherein the central heating coil includes inner and outer coil portions, which are overlapping each other.

7. The induction-heat cooking system according to one of any preceding claims,
wherein the central heating coil includes a central opening with a magnetic member extending therethrough.

8. The induction-heat cooking system according to claim 7,
further comprising:
a magnetic member for magnetically coupling the central heating coil with each of the peripheral heating coils, the magnetic member including a plurality of peripheral core portions each extending through a central opening of each of the peripheral heating coils, a central core portion extending through a central opening of the central core portion, and a connection member for connection between the peripheral core portion and the peripheral core portions.
